# EUROPÄISCHE PATENTSCHRIFT

(11) **EP 2 936 343 B1**
(45) Veröffentlichungstag und Bekanntmachung des Hinweises auf die Patenterteilung: **22.07.2020**
(21) Anmeldenummer: 13802925.1
(22) Anmeldetag: 03.12.2013
(51) Int. Cl.: G06F 16/438

(54) **VERFAHREN ZUR KENNZEICHNUNG EINER TEILMENGE EINER IN EINER SPEICHEREINHEIT ABGELEGTEN GRUNDMENGE VON DATENSÄTZEN UND ZUR VISUALISIERUNG ZUMINDEST EINES TEILS DER GEKENNZEICHNETEN TEILMENGE AUF EINER ANZEIGEEINHEIT**
METHOD FOR DESIGNATING A SUBSET OF A BASIC SET OF DATA RECORDS STORED IN A MEMORY UNIT AND FOR VISUALIZING AT LEAST A PART OF THE DESIGNATED SUBSET ON A DISPLAY UNIT
PROCÉDÉ POUR IDENTIFIER UNE QUANTITÉ PARTIELLE D'UNE QUANTITÉ DE BASE DE JEUX DE DONNÉES STOCKÉE DANS UNE UNITÉ DE MÉMOIRE ET POUR VISUALISER AU MOINS UNE PARTIE DE LA QUANTITÉ PARTIELLE IDENTIFIÉE SUR UNE UNITÉ D'AFFICHAGE

(30) Priorität: 20.12.2012 DE 102012024954
(43) Veröffentlichungstag der Anmeldung: 28.10.2015
(73) Patentinhaber: Volkswagen Aktiengesellschaft, 38440 Wolfsburg (DE)
(72) Erfinder: MISCHKE, Michael, 10829 Berlin (DE); JOACHIM, Manuel, 38110 Braunschweig (DE); WITTKÄMPER, Michael, 38102 Braunschweig (DE); HORNA, Günter, 80801 München (DE)
(74) Vertreter: Patentanwälte Bals & Vogel
(86) Internationale Anmeldenummer: PCT/EP2013/075429
(87) Internationale Veröffentlichungsnummer: WO 2014/095357

(56) Entgegenhaltungen:
- EP-A1- 1 801 711
- EP-A1- 2 284 730
- WO-A1-2004/008460
- US-A1- 2008 005 688
- US-A1- 2009 164 473
- US-A1- 2009 193 351

## Beschreibung

Die Erfindung betrifft ein Verfahren zur Kennzeichnung einer Teilmenge einer in einer Speichereinheit abgelegten Grundmenge von Datensätzen und zur Visualisierung zumindest eines Teils der gekennzeichneten Teilmenge auf einer Anzeigeeinheit.

Ein derartiges Verfahren ist aus der EP 1 850 092 A1 und auch aus der
US 2008/0313222 A1 bekannt.

Beiden Dokumenten liegt das Problem zu Grunde, ein verbessertes Verfahren für die Erstellung von so genannten Wiedergabelisten bereitzustellen.

So hat in den letzten Jahren die Möglichkeit, große Datenmengen an Audio- und Videodaten (z.B. in Form von MP3- und/oder MP4-Dateien) kostengünstig speichern zu können, enorm zugenommen und wird in der Praxis auch genutzt.

Um trotz des zum Teil riesigen Datenvolumens auf praktikable Art und Weise nun Wiedergabelisten erstellen zu können, welche in der Regel nur eine persönliche und geschmacksbezogene Auswahl eines Nutzers aus der Grundmenge seiner abgespeicherten Dateien darstellen, wenden sich die genannten Dokumente von der bislang üblichen, rein listenbasierten Erstellung derartiger Wiedergabelisten ab.

Bei beiden Dokumenten wird vorgeschlagen, die Grundmenge der vorhandenen Datensätze landkartenartig auf einer Anzeigeeinheit darzustellen.

So werden in der EP 1 850 092 A1 virtuelle "Inseln" auf einer Anzeigeeinheit dargestellt, wobei die virtuellen Inseln jeweils eine bestimmte Musikrichtung (Rock, Klassik, Folk, Jazz, etc.) repräsentieren sollen. Jeder virtuellen Insel ist dabei also eine Vielzahl von Musiktiteln (Musikdateien) eines gleichen Musikgenres zugeordnet. Der Nutzer hat dabei die Möglichkeit, sich in diese Inseln bis auf die vorhandenen Musiktitel hineinzuzoomen, wobei jede Insel Städte enthält, welche für jeweils einen Musikinterpreten stehen und jede Stadt wiederum Häuser, die jeweils einem Musiktitel entsprechen.

Zur Kennzeichnung mehrerer Datensätze und damit zur Erstellung einer Wiedergabeliste muss ein Nutzer lediglich eine "Route" durch die landkartenähnliche Struktur definieren, ähnlich der Vorgehensweise bei einer Routenerstellung durch ein Navigationssystem. Hierbei kann der Nutzer durch die Auswahl von Bildbereichen auf der Anzeigeeinheit in die jeweiligen Insel- bzw. Stadtkarten ein- und auszoomen und so Städte bzw. Häuser und damit einzelne Musikdateien oder ganze Gruppen von Musikdateien durch Antippen auf der angezeigten Insel- bzw. Stadtkarte auswählen.

Eine aufwändige listenbasierte Musikauswahl kann somit entfallen.

In ähnlicher Weise erfolgt eine kartenartige Darstellung von Musikdateien in der

US 2008/0313222 A1. Hierbei werden "ähnliche" Künstler dicht zusammen positioniert, so dass Cluster von Künstlern mit ähnlichen Eigenschaften gebildet werden. Den Eigenschaften liegen dabei Auswahlkriterien wie Stimmung, Genre, Erscheinungsjahr, etc. zu Grunde. Die Darstellung der Dateicluster kann dabei zweidimensional erfolgen, wobei beispielsweise eine Ordnung der Cluster auf einer Anzeigeeinrichtung von unten nach oben einem steigenden Tempo und eine Anordnung der Dateicluster von links nach rechts einer chronologischen Reihenfolge entspricht. Zur Erstellung einer Wiedergabeliste muss der Nutzer "Streckenpunkte" auf der kartenartigen Darstellung definieren. Der Weg durch die Streckenpunkte stellt dann die erstellte Wiedergabeliste dar.

Auch hier ist eine listenbasierte Erstellung einer Wiedergabeliste nicht mehr notwendig.

Weitere beispielhafte Verfahren zur Kennzeichnung einer Teilmenge einer in einer Speichereinheit abgelegten Grundmenge von Datensätzen sind aus den Schriften US 2008/005688 A1 und US 2009/193351 A1 bekannt.

Der vorliegenden Erfindung liegt die Aufgabe zu Grunde, ein alternatives gattungsgemäßes Verfahren bereitzustellen, welches auf intuitive Weise durchführbar ist.

Diese Aufgabe wird mit den Merkmalen von Patentanspruch 1 gelöst. Vorteilhafte Ausführungen bzw. Weiterbildungen der Erfindung sind den jeweiligen Unteransprüchen entnehmbar.

Die Erfindung geht daher aus von einem Verfahren zur Kennzeichnung einer Teilmenge einer in wenigstens einer Speichereinheit abgelegten Grundmenge von Datensätzen und zur Visualisierung zumindest eines Teils der gekennzeichneten Teilmenge auf einer Anzeigeeinheit.

Erfindungsgemäß ist vorgesehen, dass zur Kennzeichnung der Teilmenge aus der Grundmenge auf der Anzeigeeinheit wenigstens zwei graphisch abgegrenzte Anzeigebereiche gebildet werden, von denen in einem ersten Anzeigebereich Datensätze repräsentierende Kennzeichnungsobjekte der Grundmenge dargestellt werden und einem zweiten Anzeigebereich die gekennzeichnete oder zu kennzeichnende Teilmenge der Kennzeichnungsobjekte zugeordnet ist, wobei eine Kennzeichnung einer Teilmenge durch Markierung wenigstens eines Kennzeichnungsobjektes im ersten Anzeigebereich, Bewegung des markierten wenigstens einen Kennzeichnungsobjektes in den zweiten Anzeigebereich und durch anschließendes Aufheben der Markierung erfolgt, und wobei die Aufhebung einer Kennzeichnung eines Datensatzes durch Markierung eines Kennzeichnungsobjektes im zweiten Anzeigebereich, Bewegung des markierten Kennzeichnungsobjektes in den ersten Anzeigebereich und durch anschließendes Aufheben der Markierung erfolgt. Hierzu ist es erfindungsgemäß vorgesehen, dass der zweite Bereich derart verändert wird oder veränderbar ist, dass auf der Anzeigeeinheit anstatt zumindest eines Teils der Grundmenge zumindest ein Teil der gekennzeichneten Teilmenge dargestellt wird, wobei vor einer Kennzeichnung wenigstens eines Kennzeichnungsobjektes eine Animation aktivierbar ist oder aktiviert wird, bei der sich der zweite Anzeigebereich von einer maximalen Größe hin zu einer minimalen Größe verändert, und wobei vor einer Aufhebung einer Kennzeichnung eine Animation aktivierbar ist oder aktiviert wird, bei der sich der zweite Anzeigebereich von einer minimalen Größe hin zu einer maximalen Größe verändert, und dass bei der Animation der zweite Bereich schubladenartig herausgezogen wird, um deutlich zu machen, dass der zweite Bereich durch ein Verschieben einer Verschiebehilfe verändert werden kann, und dass die Veränderung des zweiten Bereichs in einer Draufsicht auf eine Anzeigefläche der Anzeigeeinheit gesehen, durch eine Verschiebung einer Grenze des zweiten Bereichs in Querrichtung oder Hochrichtung der Anzeigefläche erfolgt.

Anders ausgedrückt, erfolgt die Kennzeichnung einer Teilmenge der Datensätze durch eine Vorgehensweise, die umgangssprachlich auch als "drag and drop" (Ziehen und Ablegen) bezeichnet wird. Die Verwendung einer "drag and drop"-Bedienoperation ist für die Kennzeichnung einer Teilmenge von Datensätzen aus einer Grundmenge von Datensätzen bislang vollkommen unüblich und kann höchst zweckmäßig beispielsweise zur Erstellung einer Wiedergabeliste genutzt werden.

Auf diese Art und Weise ist für den Benutzer somit höchst intuitiv die Kennzeichnung einer Teilmenge von Datensätzen aus einer Grundmenge von Datensätzen möglich. Die Art der Datensätze kann dabei sehr unterschiedlich sein. Es können beispielsweise reine Audio-Datensätze (z. B. MP3), Video-Datensätze (z. B. MP4), Kontakt-Datensätze (z. B. Namen, Adressen, Telefonnummern) aber auch Karten-Datensätze eines Navigationssystems sein. Eine ausgewählte Teilmenge aus diesen Grundmengen an Datensätzen entspricht dann jeweils beispielsweise einer Wiedergabeliste für Audio- oder Videodateien, einer Favoritenliste von vorhandenen Kontakte oder auch beispielsweise einer favorisierten Reiseroute mit nacheinander anzufahrenden Städten und Sehenswürdigkeiten.

Die Kennzeichnung der Teilmenge durch den Nutzer erfolgt also rein graphisch durch ein Ziehen und Ablegen ("drag and drop"), wobei eine rein logische Kennzeichnung erfolgt. Ein gekennzeichneter Datensatz wird dabei logisch nicht der Grundmenge von Datensätzen entnommen, vielmehr verbleibt der gekennzeichnete Datensatz logisch nach wie vor der Grundmenge zugeordnet, welche durch den ersten Anzeigebereich repräsentiert wird. Es erfolgt durch die Kennzeichnung lediglich eine zusätzliche logische Zuordnung zum zweiten Anzeigebereich.

Erfindungsgemäß ist vorgesehen, dass der zweite Bereich derart verändert wird oder veränderbar ist, dass auf der Anzeigeeinheit anstatt zumindest eines Teils der Grundmenge zumindest ein Teil der gekennzeichneten Teilmenge dargestellt wird.

Auf diese Weise kann ein Bediener auf sehr einfache, intuitive Art und Weise zwischen zwei Ansichten wechseln. In der einen Ansicht kann sich der Nutzer beispielsweise alle zur Verfügung stehenden MP3-Dateien bzw. (falls die Größe einer Anzeigefläche der Anzeigeeinheit nicht ausreicht) nur einen Teil der verfügbaren MP3-Dateien anzeigen lassen, während in der anderen Ansicht beispielsweise die gekennzeichneten und somit eine Wiedergabeliste bildende MP3-Dateien dargestellt werden. Auch hier kann wiederum je nach Größe der Anzeigefläche und der Größe der gekennzeichneten Teilmenge wiederum auch nur ein Teil der gekennzeichneten Teilmenge dargestellt werden.

In beiden Fällen ist jedoch eine Verschiebbarkeit des jeweils dargestellten Ausschnitts der sichtbaren graphischen Kennzeichnungsobjekte über geläufige Verschiebe- und Wischgesten mittels einer geeigneten Bedieneinheit möglich.

Je nach Anwendung des Verfahrens im speziellen technischen Umfeld können Anzeigeeinheit und Bedieneinheit auseinander- oder auch zusammenfallen, beispielsweise bei der Nutzung eines Touchpads als Bedieneinheit für einen LCD-Bildschirm einerseits oder der Nutzung eines Touchscreens als gleichzeitige Bedien- und Anzeigeeinheit andererseits. Die Veränderung des zweiten Bereiches kann dabei in seiner Größe, Form und/oder Position erfolgen. Beispielsweise kann sich der zweite Bereich nach dessen Markierung oder Aktivierung (beispielsweise durch dessen Antippen bei Nutzung eines Touchscreens) in bekannter Weise in der Art eines Pop-up-Bereiches schlagartig vergrößern.

Erfindungsgemäß ist vorgesehen, dass zweckmäßigerweise die Veränderung des zweiten Bereiches, in einer Draufsicht auf eine Anzeigefläche der Anzeigeeinheit gesehen, durch eine Verschiebung einer Grenze des zweiten Bereiches in Querrichtung oder Hochrichtung der Anzeigefläche erfolgt. Die Grenze kann graphisch auf einer Anzeigeeinheit beispielsweise linienartig dargestellt werden. Insbesondere wird gemäß einer weiteren Ausbildung des Erfindungsgedankens zur Anzeige des zumindest einen Teils der Grundmenge oder des zumindest eines Teils der gekennzeichneten Teilmenge die Grenze des zweite Bereiches von einer Seite der Anzeigefläche in Richtung einer gegenüberliegenden Seite der Anzeigefläche verschoben oder ist in dieser Weise verschiebbar.

Auf diese Weise lässt sich der zweite Bereich quasi "schubladenartig" in die Anzeigefläche der Anzeigeeinheit hinein ziehen oder weitgehend aus dieser wieder herausbewegen. Dies kommt dem natürlichen Empfinden und Verständnis des Nutzers sehr entgegen. Er begreift den zweiten Anzeigebereich als Schublade, in die bzw. aus der er Objekte nach Bedarf hineinlegen und/oder herausnehmen kann.

Eine sehr vorteilhafte Weiterbildung des Verfahrens sieht zudem vor, dass die Grundmenge und/oder die gekennzeichnete Teilmenge der in der Speichereinheit abgelegten Datensätze auf der Anzeigeeinheit in Form einer landkartenähnlichen Struktur darstellbar sind oder dargestellt werden und die landkartenähnliche Struktur bei der Darstellung der Grundmenge und/oder der gekennzeichneten Teilmenge in einer Draufsicht auf die Anzeigeeinheit zweidimensional geordnet erfolgt, in der Art, dass entlang einer Querachse ein erstes Sortierkriterium und entlang einer Hochachse ein zweites Sortierkriterium wirksam ist.

In Bezug auf Musikdateien können als Sortierkriterien beispielsweise in den Datensätzen abgelegte Informationen, wie Name eines Interpreten, Geschwindigkeit eines Musiktitels, Erscheinungsjahr eines Titels oder Albums sowie Musikgenre eines Titels oder Albums sein.

Die zweidimensionale Ordnung soll im Folgenden auch als Filter bezeichnet werden. Es ist eine beliebige Anzahl von Filtern denkbar, wobei neben den genannten Sortierkriterien auch eigens vom Nutzer ausgedachte Kriterien, wie z. B. "mag ich weniger" oder "mag ich lieber", "bei guter Laune" oder "bei schlechter Laune" festlegbar sind. Derartige, selbst festlegbare Kriterien sind somit in höchstem Maße personifiziert und bieten dem Nutzer eine ideale Vorsortierung der Datensätze, um noch intuitiver und schneller nach seinem Geschmack insbesondere die für eine Wiedergabeliste zu kennzeichnenden Datensätze auffinden zu können.

Bei der Erstellung von Favoritenlisten aus Kontakt-Datensätzen oder bei der Planung einer Reiseroute aus einer Grundmenge von Örtlichkeiten mithilfe eines Navigationssystems können wiederum ganz andere Sortierkriterien eine Rolle spielen.

Die Füllung der Datensätze mit derartigen für die Sortierung notwendigen Informationen kann zweckmäßigerweise vor Durchführung des erfindungsgemäßen Verfahrens in einem geeigneten, computerunterstützten System erfolgen.

Vorteilhafterweise erfolgt nach erfolgreicher Kennzeichnung eines Datensatzes eine optische, akustische und/oder haptische Rückmeldung. Auf diese Weise kann der Nutzer sicher sein, dass eine Bedienoperation wunschgemäß durchgeführt wurde. Eine solche Rückmeldung kann beispielsweise durch eine kleine Animation innerhalb des zweiten Anzeigebereiches, durch eine Vibration eines Teils einer Bedieneinrichtung und/oder durch eine Farb- und/oder Größenänderung eines erfindungsgemäß gekennzeichneten Kennzeichnungsobjektes erfolgen.

Erfindungsgemäß erfolgt analog zur Kennzeichnung eines Datensatzes die Aufhebung einer Kennzeichnung eines Datensatzes durch Markierung eines Kennzeichnungsobjektes im zweiten Anzeigebereich, Bewegung des markierten Kennzeichnungsobjektes in den ersten Anzeigebereich und durch anschließendes Aufheben der Markierung.

Erfindungsgemäß wird vorgesehen, dass eine Animation aktivierbar ist oder aktiviert wird, bei der sich der zweite Anzeigebereich von einer maximalen Größe hin zu einer minimalen Größe verändert. Eine solche Animation erfolgt vor Kennzeichnung der Kennzeichnungsobjekte, also beispielsweise unmittelbar vor Erstellung einer Wiedergabeliste.

Erfindungsgemäß wird vorgesehen, dass eine Animation aktivierbar ist oder aktiviert wird, bei der sich der zweite Anzeigebereich von einer minimalen Größe hin zu einer maximalen Größe verändert. Eine derartige Animation erfolgt vor Aufhebung einer Kennzeichnung der Kennzeichnungsobjekte, also beispielsweise unmittelbar vor Entfernung von Musikalben oder Musiktiteln aus einer Wiedergabeliste.

Die Erfindung betrifft aber auch ein Fahrerassistenzsystem in einem Kraftfahrzeug mit wenigstens einer Informationsverarbeitungseinheit, wenigstens einer angeschlossenen oder anschließbaren Speichereinheit, wenigstens einer Eingabeeinheit und wenigstens einer Anzeigeeinheit, wobei in der wenigstens einen Speichereinheit Datensätze abgelegt oder ablegbar sind, welche gemäß dem erfindungsgemäßen Verfahren mittels der wenigstens einen Eingabeeinheit kennzeichenbar und mittels der wenigstens einen Anzeigeeinheit visualisierbar sind.

Durch ein solches Fahrerassistenzsystem kann der Aufwand beispielsweise zur Erstellung einer Wiedergabeliste deutlich reduziert und damit auch im Kraftfahrzeug praktikabel, intuitiv und zeitgerecht durchgeführt werden. Eine mühsame, listenbasierte Erstellung von Wiedergabe- oder Favoritenlisten zuhause auf einem Computer, losgelöst vom Fahrerassistenzsystem im Kraftfahrzeug ist somit nicht mehr unbedingt notwendig.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1a bis g: erste Schritte zur Erstellung einer neuen Wiedergabeliste mittels des erfindungsgemäßen Verfahrens,
- Fig. 2a bis c: Kennzeichnung von Musikalben für eine Wiedergabeliste,
- Fig. 3a bis d: Kennzeichnung von Musiktiteln für eine Wiedergabeliste,
- Fig. 4a bis d: Auswahl und Anzeige einer bestimmten Wiedergabeliste,
- Fig. 5a bis c: Löschen eines Albums aus einer Wiedergabeliste,
- Fig. 5d: Abspeichern von durchgeführten Änderungen bei einer Wiedergabeliste
- Fig. 6: ein Fahrerassistenzsystem zur Durchführung des erfindungsgemäßen Verfahrens und
- Fig. 7: ein Kraftfahrzeug mit einem Fahrerassistenzsystem zur Durchführung des erfindungsgemäßen Verfahrens.

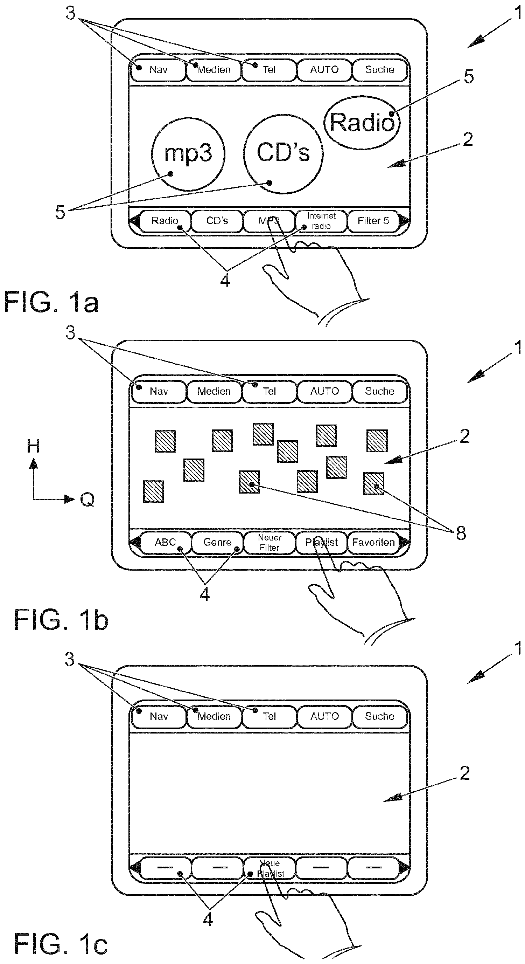

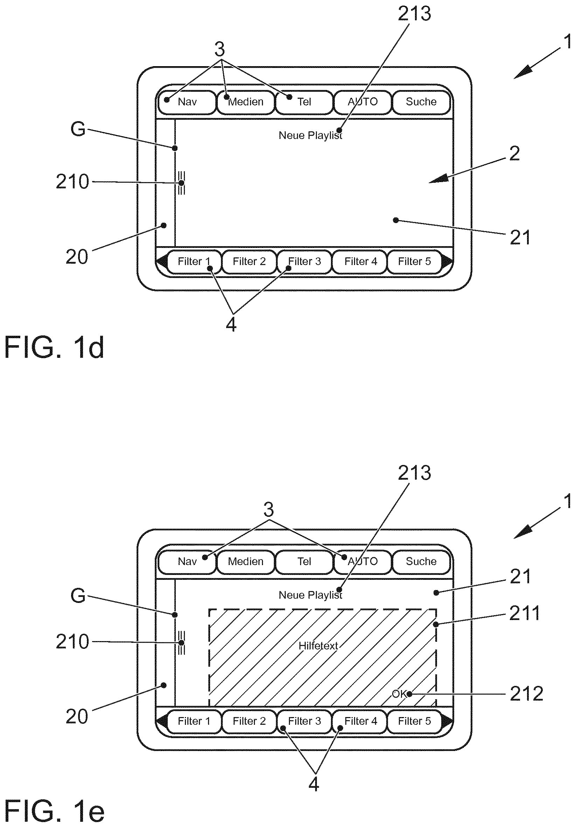

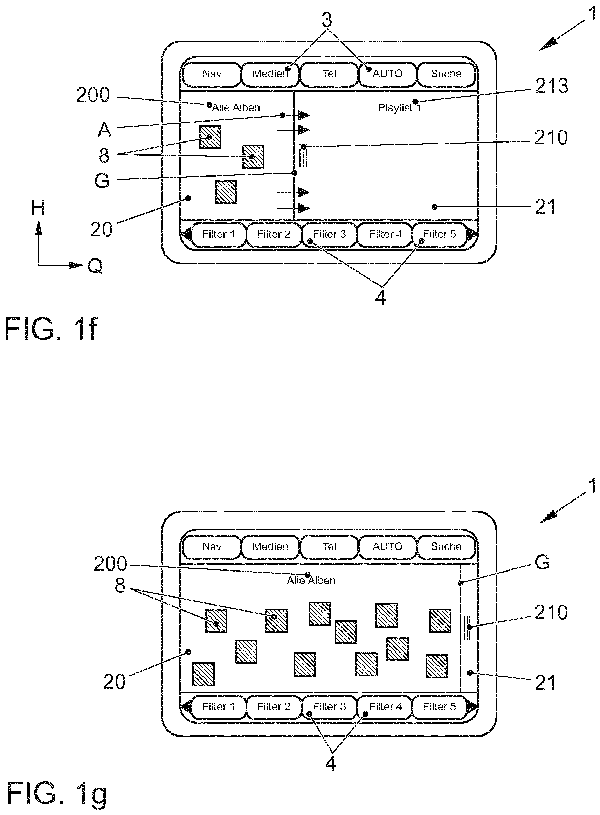

Zunächst wird auf die Fig. 1 Bezug genommen. Darin ist eine Anzeigeeinheit 1 ersichtlich, welche als so genannter Touchscreen mit einer berührungsempfindlichen Anzeigefläche 2 ausgebildet ist. Auf der Anzeigefläche 2 sind bestimmten Funktionen fest zugeordnete Tasten 3 (so genannte Hardkeys) ersichtlich, denen beispielsweise die aufrufbaren Funktionsgruppen "Navigation", "Medien", "Telefon", "Auto" und "Suche" zugeordnet sein können.

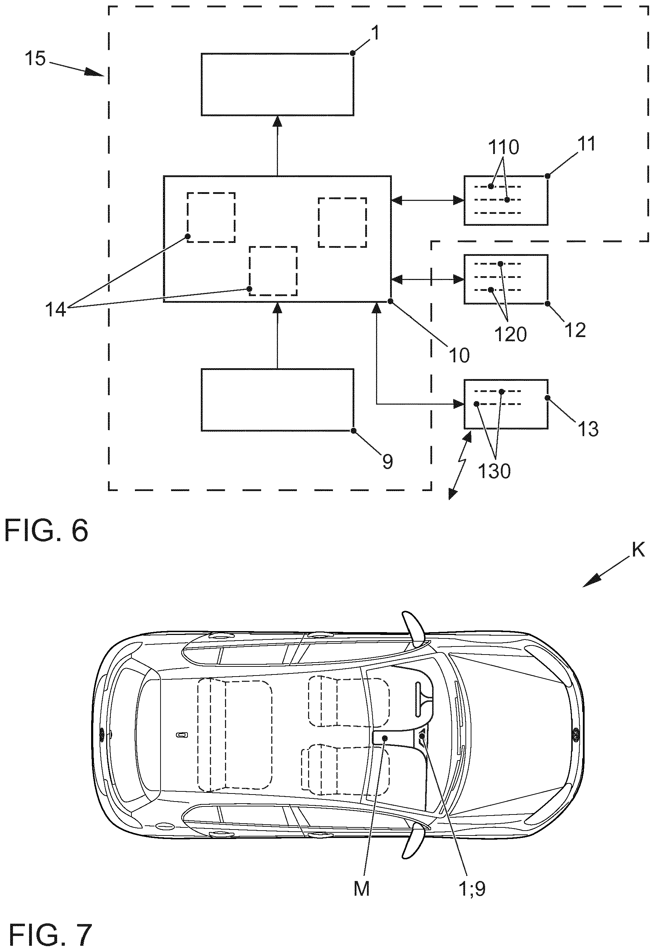

Die Anzeigeeinheit 1 ist Bestandteil eines Fahrerassistenzsystems, welches neben Navigationsfunktioen auch Infotainment-, Telematik- und Einstellungsfunktionen für ein Kraftfahrzeug (z. B. Klima-, Heizungs-, und Sicherheitsfunktionen) umfasst (vgl. auch Fig. 6).

Ferner sind im unteren Bereich der Anzeigefläche 2 Tasten 4 mit kontextabhängig zugeordneten Funktionen (so genannte Softkeys) ersichtlich.

In der Fig. 1a wurde von einem Bediener der Funktionsbereich "Medien" bereits ausgewählt. Auf der Anzeigefläche 2 sind daher Gruppen von in einem Speicher abgelegten Datensätzen zunächst als Objekt-Cluster 5 dargestellt. Derartige Objekt-Cluster 5 können beispielsweise die Gesamtheit aller verfügbaren MP3-Dateien (Musikalben, Musiktitel), aller verfügbaren CDs eines CD-Wechslers und/oder auch aller verfügbaren Links zu Internet-Radiosendern sein.

Im unteren Teil der Anzeigefläche 2 sind den Tasten 4 solche Funktionen zugeordnet, die eine direkte Auswahl der besagten Mediengruppen zulassen. Die Taste "Filter 5" deutet an, dass auch weitere, hier nicht genannte Medien direkt anwählbar sind.

Nach Anwahl der Taste 4 "MP3" oder durch Berührung des Objekt-Clusters 5 "MP3" werden auf der Anzeigefläche 2 alle verfügbaren Alben 8 dargestellt (vgl. Fig.1b). Ist die Anzahl der verfügbaren Alben 8 so groß, dass diese nicht mehr auf der Anzeigefläche 2 darstellbar sind, so wird nur ein Ausschnitt der Menge an verfügbaren Alben 8 dargestellt und der Benutzer graphisch darauf hingewiesen, dass er durch Verschiebe- oder Wischgesten auf der Anzeigefläche 2 einen anderen Bildausschnitt herstellen und damit eine andere Teilmenge aller verfügbaren Alben 8 anzeigen lassen kann.

Auch sind die Tasten 4 in diesem Kontext anders belegt und geben dem Bediener die Möglichkeit, zwischen unterschiedlichen Sortierungen der verfügbaren Alben 8 auszuwählen.

Es fällt auf, dass als Standardvorgabe die Darstellung der Alben 8 nicht listenartig, sondern in der Art einer Landkarte erfolgt. Die Darstellung erfolgt dabei zweidimensional, d. h. in Richtung einer Querachse Q der Anzeigefläche 2 erfolgt die Sortierung nach einem ersten Sortierkriterium und in einer Hochachse H der Anzeigefläche 2 nach einem zweiten Sortierkriterium.

Der Bediener kann durch Berührung von Tasten 4 standardmäßig vorgegebene Sortierkriterien auswählen. So kann er eine Darstellung ("ABC") wählen, bei der auf der Hochachse H eine alphabetische Sortierung nach Namen von Musikinterpreten und in der Querachse Q gleichzeitig eine chronologische Sortierung nach dem Erscheinungsjahr von Alben 8 erfolgt. Er kann aber auch eine Darstellung ("Genre") wählen, bei der auf der Hochachse H die Musikgenre (beispielsweise Klassik, Pop, Jazz) aufgetragen sind und auf der Querachse Q wiederum das Erscheinungsjahr oder auch die Geschwindigkeit der Musik abgetragen ist.

Der Bediener hat jedoch auch die Möglichkeit, eine Darstellung nach gänzlich eigenen Vorgaben ("neuer Filter") zu wählen. Eine solche Darstellung kann beispielsweise auf der Querachse Q den einen Geschmack ("gefällt mir" bzw. "gefällt mir nicht") und auf der Hochachse H die Geschwindigkeit der verfügbaren Musik darstellen.

Hierdurch können in höchstem Maße individualisierbar Darstellungs- bzw. Sortierkriterien gewählt werden, die ein intuitives und schnelles Auffinden von gewünschten Musikdateien als Basis für eine zu erstellende Wiedergabeliste ermöglichen.

Schließlich gibt es auch eine Taste 4 ("Favoriten"), mit der vordefinierte Favoriten aufgerufen werden können. Vorzugsweise erfolgt die Aktivierung dieser Funktion akkumulativ zu einem der bereits beschriebenen Sortierkriterien, so dass die Favoriten beispielsweise auf der Hochachse H nach den Namen der vorhandenen Musikinterpreten und auf der Querachse Q nach dem Erscheinungsjahr der Alben sortiert erscheinen.

Wünscht der Bediener nun, aus dieser Darstellung vorhandene Wiedergabelisten aufzurufen oder eine neue Wiedergabeliste zu erstellen, so betätigt er eine entsprechende Taste 4 ("Playlist") und gelangt somit in die Darstellung gemäß Fig. 1c. Da im vorhandenen Ausführungsbeispiel noch keine Wiedergabeliste erzeugt wurde, ist lediglich eine der Tasten 4 belegt und durch entsprechende Berührung dieser Taste 4 ("neue Playlist") gelangt der Bediener in eine Darstellung gemäß Fig. 1d.

In dieser Darstellung wird der zwischen den Tasten 3 und 4 befindliche Bereich der Anzeigefläche 2 in einen ersten Anzeigebereich 20 und in einen zweiten Anzeigebereich 21 graphisch aufgeteilt. Die Anzeigebereiche 20, 21 sind durch eine linienartige, in der Figur vertikal verlaufende Grenze G voneinander getrennt. Der Anzeigebereich 20 ist zunächst viel kleiner als der Anzeigebereich 21.

Ferner wird im Anzeigebereich 21 ein Textfeld 213 eingeblendet, welches darauf hinweist, dass dem Bereich 21 eine neue Wiedergabeliste zugeordnet ist beziehungsweise der Anzeigebereich 21 den Inhalt einer solchen offenbart. Eine Verschiebehilfe 210 ist symbolartig dargestellt, auf die später noch eingegangen wird.

Ausgehend hiervon wird ein Pop-up-Fenster 211 mit einem Hilfetext eingeblendet (vgl. Fig. 1e), nach dessen Bestätigung (OK-Feld 212) das Pop-up-Fenster 211 verschwindet und der Benutzer zu den Darstellungen gemäß den Fig. 1f und 1g gelangt.

Der Übergang zu den Fig. 1f zu 1g erfolgt durch eine Animation A. Bei dieser bewegt sich die Grenze G und damit also der zunächst größere, zweite Anzeigebereich 21 in Richtung der bereits erwähnten Querachse Q von links nach rechts, so dass der zweite Anzeigebereich 21 immer kleiner und der erste Anzeigebereich 20 immer größer wird. Schließlich nimmt die Grenze G eine Position gemäß Fig. 1g ein.

Der zweite Bereich 21 ist somit einer (zunächst noch leeren) Schublade nachempfunden, welche von einem geöffneten, in einen geschlossenen Zustand verschoben wird.

Der erste Anzeigebereich 20 ist nunmehr sehr viel größer und zeigt zumindest einen Teil aller verfügbaren MP3-Dateien (Alben 8). Zusätzlich kann ein Text 200 vorgesehen werden ("alle Alben"), der dies noch verdeutlicht.

Es ist ersichtlich, dass die Darstellung der verfügbaren Musikalben 8 wiederum nach Art einer Landkarte erfolgt. Über die Tasten 4 werden verfügbare Filter bereitgestellt, mit der der Bediener die Sortierkriterien für die bereits erwähnte zwei-dimensionale Darstellung der Grundmenge aller verfügbaren Musikalben 8 beeinflussen kann.

Abweichend vom Ausführungsbeispiel ist dazu natürlich auch eine andere Richtung der Animation A denkbar. So kann die Grenze G beispielsweise auch als horizontaler Strich ausgebildet sein und in Hochrichtung H der Anzeigefläche 2 bewegt werden.

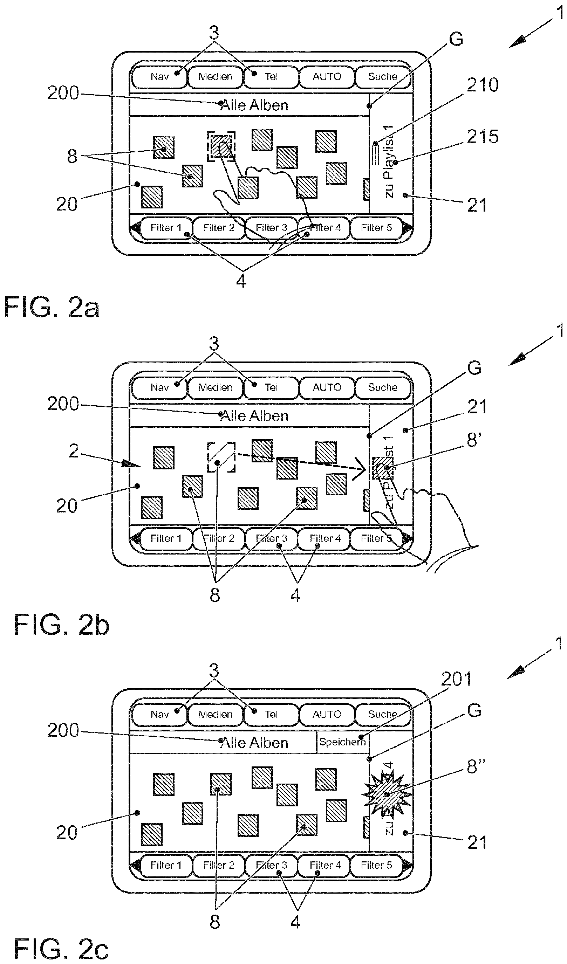

Anhand der Fig. 2 soll nun dargestellt werden, wie erfindungsgemäß (ausgehend von der Darstellung gemäß Fig. 1g) Musikalben 8 für die Erzeugung einer Wiedergabeliste gekennzeichnet werden.

Jedes Album 8 repräsentiert als Kennzeichnungsobjekt eine Mehrzahl von in einem Speicher abgelegten Musikdateien (Datensätzen). Durch Berühren eines der Musikalben 8 wird dieses graphisch hervorgehoben (vgl. Fig. 2a). Zusätzlich ist denkbar, dass im zweiten Anzeigebereich 21 ein Textfeld 215 erscheint, welches eine zusätzliche Anweisung an den Bediener bereitstellt (beispielsweise "zu Playlist 1"). Nach erfolgter Markierung eines Albums 8 im ersten Anzeigebereich 20 wird dieses markierte Objekt in den zweiten Anzeigebereich 21 bewegt (8', vergleiche Fig. 2b) und anschließend wird die Markierung des Albums 8' durch Aufgeben der Berührung der Anzeigefläche 2 aufgehoben, mit der Folge, dass eine erfolgreiche Kennzeichnung des Albums 8 und damit seine logische Verknüpfung zu einer neuen Wiedergabeliste haptisch, akustisch und/oder optisch z. B. durch ein Vibrieren, eine Farbänderung oder eine Animation (8") quittiert wird (vgl. Fig. 2c).

Die gemäß Fig. 2 beschriebene Verfahrensweise kann beliebig fortgesetzt werden. Zwischendurch kann der Bediener je nach Bedarf durch Wisch- oder Verschiebegesten einen gewünschten Ausschnitt aus der Grundmenge aller verfügbaren Musikalben 8 auswählen oder auch durch Auswahl einer entsprechende Taste 4 wunschgemäß seine Sortierkriterien festlegen.

Durch das beschriebene Verfahren kann durch einfaches Ziehen und Ablegen (so genanntes drag and drop) also auf bislang vollkommen unübliche Art und Weise eine Wiedergabeliste auf höchst intuitive Art und Weise erstellt werden.

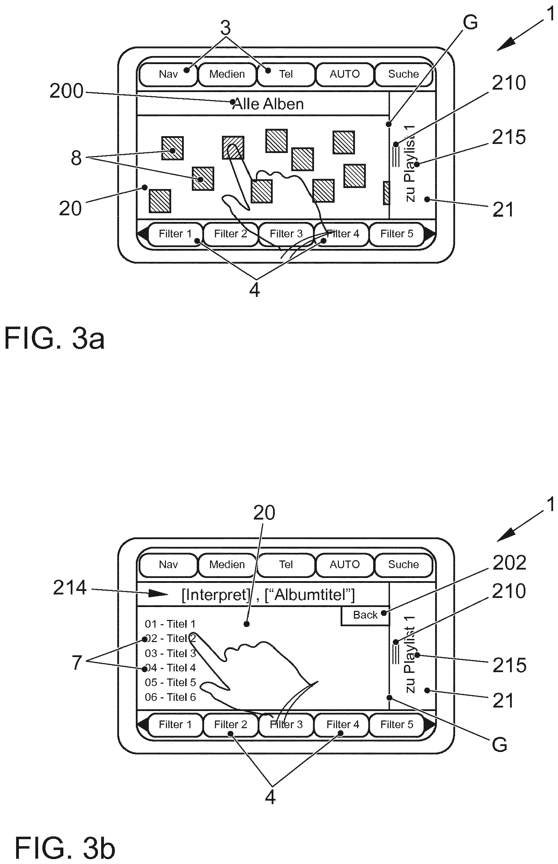

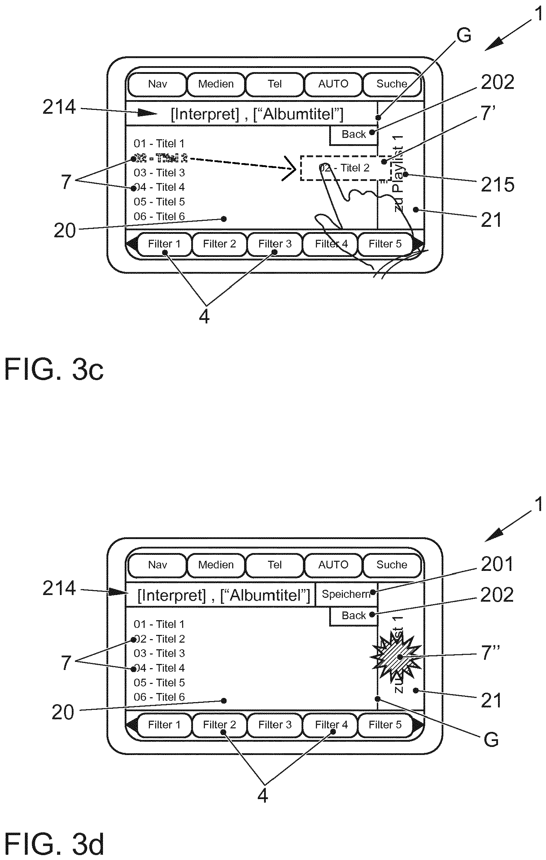

Durch die Kombination mit der bereits erwähnten zwei-dimensionalen Sortierung nach Art einer Kartendarstellung ist zudem ein schnelles Auffinden der gewünschten Basis-Datensätze möglich. In ähnlicher Weise können einzelne Titel bzw. einzelne Datensätze eines Albums 8 zu einer Wiedergabeliste hinzugefügt werden. Dies wird anhand von Fig. 3 erläutert.

Ausgehend von einer Darstellung gemäß Fig. 1g kann der Bediener durch leichtes Antippen auf eines der Musikalben 8 (vgl. Fig. 3a) dieses öffnen und alle im Musikalbum 8 enthaltenen Musiktitel 7 werden nach Art eines Pop-ups (gegebenenfalls auch halbtransparent) auf der Anzeigefläche 2, genauer gesagt im ersten Anzeigebereich 20 in Listenform angezeigt (Fig. 3b). Oberhalb der listenförmigen Darstellung können Textfelder 214 vorhanden sein, welche den ausgewählten Interpreten und den Titel des geöffneten Albums beschreiben. Über eine Zurück-Taste 202 kann die Ansicht von der listenförmigen Darstellung der Titel 7 zurück auf die Albenansicht gemäß Fig. 3a gewählt werden.

Bei Berührung eines der Titel 7 und somit erfolgter Markierung kann analog wie bei Hinzufügung eines kompletten Albums 8 zu einer Wiedergabeliste im zweiten Anzeigebereich 21 ein Hinweis in Form eines Textfeldes 215 oder Symbols erscheinen, welcher darauf hinweist, dass mit Verschieben eines markierten Titels 7 auf den zweiten Anzeigebereich 21 eine Hinzufügung zur Wiedergabeliste bewirkt wird.

In Fig. 3c ist das Bewegen eines markierten Titels 7 auf den zweiten Anzeigebereich 21 und die somit veränderte Position (7') des markierten Titels dargestellt. Nach erfolgter Aufhebung der Markierung durch Aufgabe der Berührung erfolgt analog zu Fig. 2c eine optische Rückmeldung (7") über die erfolgreiche Hinzufügung eines Titels 7 zur Wiedergabeliste in Form einer kleinen Animation. Über ein Speicherfeld 201 kann die veränderte Wiedergabeliste abgespeichert werden (vgl. Fig. 3d).

Die Hinzufügung einzelner Titel zu einer Wiedergabeliste erfolgt also ebenfalls höchst intuitiv durch einfaches "Ziehen und Ablegen" (drag and drop).

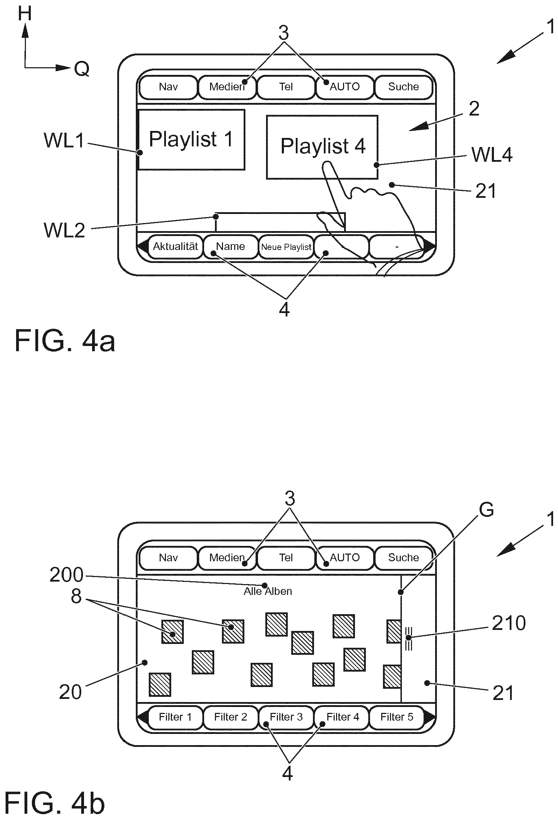

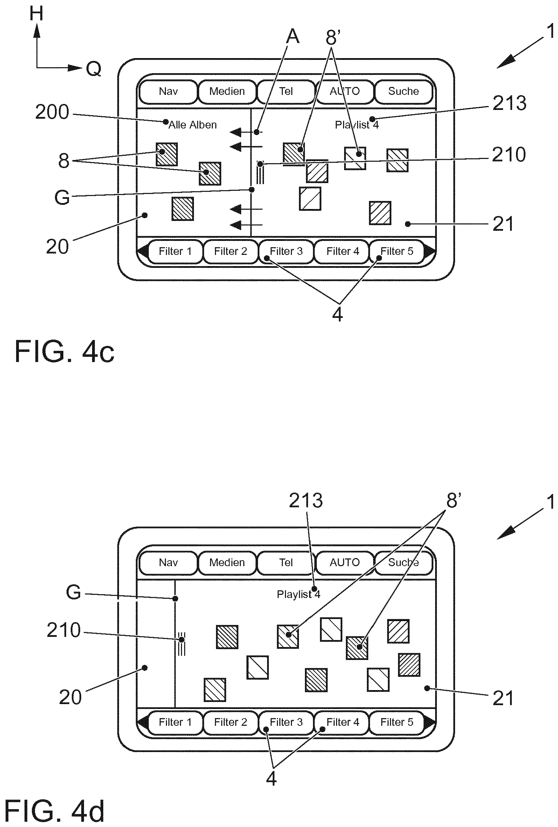

Anhand von Fig. 4 wird nun beschrieben, wie eine Wiedergabeliste aus bereits erstellten Wiedergabelisten ausgewählt und verändert werden kann. So gelangte ein Bediener, ausgehend von Fig. 1b und Betätigung einer Taste 4 "Playlist" in die Darstellung gemäß Fig. 4a.

In dieser Darstellung werden alle vorhandenen Wiedergabelisten, falls möglich, auf der Anzeigefläche 2 dargestellt. Im Ausführungsbeispiel wurden bereits vier Wiedergabelisten WL1 bis WL4 erzeugt, wobei auf der Anzeigefläche 2 nur die Wiedergabelisten WL1, WL2 und WL4 sichtbar sind. Durch entsprechende Verschiebe- oder Wischgesten kann auch die momentan nicht sichtbare Wiedergabeliste WL3 auf die Anzeigefläche 2 "geholt" werden.

Wiederum ist den Tasten 4 kontextabhängig eine entsprechende Funktion zugeordnet und die vorhandenen Wiedergabelisten WL1 bis WL4 werden wieder in einer Art Kartendarstellung präsentiert.

Für die Darstellung der Wiedergabelisten können ebenfalls unterschiedliche Sortierkriterien angewendet werden. So ist eine Taste 4 "Aktualität" ersichtlich, nach deren Auswahl die Wiedergabelisten beispielsweise in Richtung der bereits erwähnten Querachse Q nach dem Zeitpunkt ihrer Erstellung sortiert werden. Eine andere Taste 4 "Name" ermöglicht die alphabetische Sortierung nach dem Namen der Wiedergabelisten in Richtung der Hochachse A.

Es sei angemerkt, dass die landkartenartige Darstellung der Wiedergabelisten bei Auswahl eines der beschriebenen Sortierkriterien in eine listenbasierte Darstellung wechselt.

In der landkartenartigen Ansicht der Wiedergabeliste ist zudem eine Taste 4 ("neue Playlist") vorgesehen, mit der in bereits beschriebener Weise (vergleiche Fig. 1c) das Erstellen einer neuen Wiedergabeliste initiiert werden kann.

Möchte der Bediener jedoch eine vorhandene Wiedergabeliste (beispielsweise die Wiedergabeliste WL4 ("Playlist 4) öffnen und bearbeiten, so tippt er kurz auf das zugehörige Symbol auf der Anzeigefläche 2 und gelangt somit zu einer Darstellung gemäß Fig. 4b.

Dadurch wird die Anzeigefläche 2 wiederum in den ersten Anzeigebereich 20 und den zweiten Anzeigebereich 21 aufgeteilt, wobei der Anzeigebereich 21 zunächst sehr viel kleiner auf der rechten Seite der Anzeigefläche 2 dargestellt ist. Die Anzeigebereiche 20, 21 werden graphisch wieder durch eine in der Figur vertikal verlaufende, linienartige Grenze G getrennt. Der erste Anzeigebereich 20 enthält wiederum (soweit möglich) eine kartenartige Darstellung aller zur Verfügung stehenden Alben 8. Zusätzlich ist wieder ein entsprechendes Textfeld 200 vorhanden, welches auf diese Grundmenge hinweist.

Ausgehend von dieser Darstellung startet eine Animation A (vergleiche Fig. 4c) und die Grenze G und damit der zweite Bereich 21 wird von rechts nach links, also in Richtung der Querachse Q, verschoben, so dass er sich vergrößert und schließlich gemäß Fig. 4d zur Ruhe kommt. In dieser Position ist nunmehr der zweite Anzeigebereich 21 wesentlich größer als der erste Anzeigebereich 20.

Der zweite Anzeigebereich 21 wurde somit schubladenartig herausgezogen, womit auch deutlich gemacht wird, dass mithilfe der symbolartigen Verschiebehilfe 210 zwischen der Ansicht gemäß Fig. 4d und der Ansicht gemäß Fig. 4b durch einfaches Verschieben der "Schublade" bzw. der Verschiebehilfe 210 umgeschaltet werden kann.

Zusätzlich ist wiederum ein Textfeld 213 vorhanden, welches den Namen der ausgewählten Wiedergabeliste ("Playlist 4") anzeigt. Die Darstellung der in einer Wiedergabeliste vorhandenen Musikalben 8' erfolgt wiederum in der Art einer Landkarte, wobei über die Tasten 4 vom Bediener in der bereits beschriebenen Art und Weise unterschiedliche Sortierkriterien (zwei-dimensionale Filter) angewendet werden können. Somit kann der Bediener auch aus der Ansicht einer Wiedergabeliste schnell Alben 8' bzw. Titel 7' auffinden, die er aus einer Wiedergabeliste wieder streichen will.

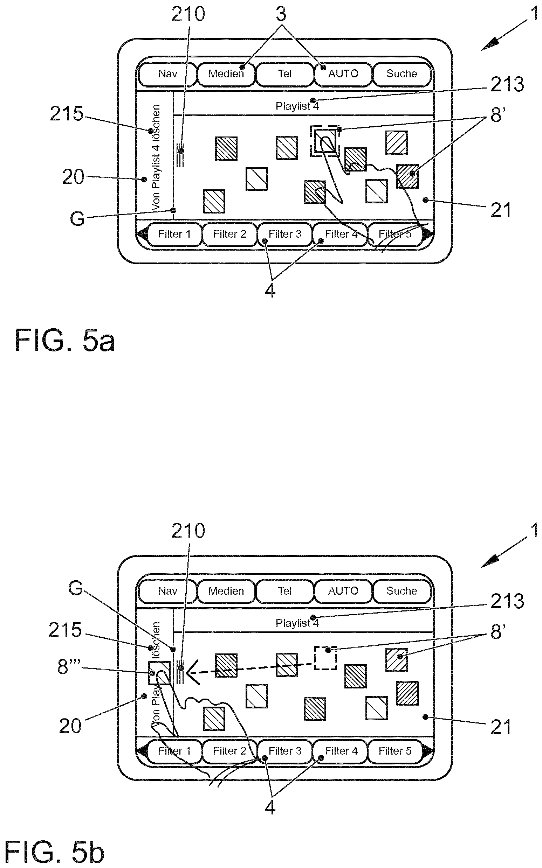

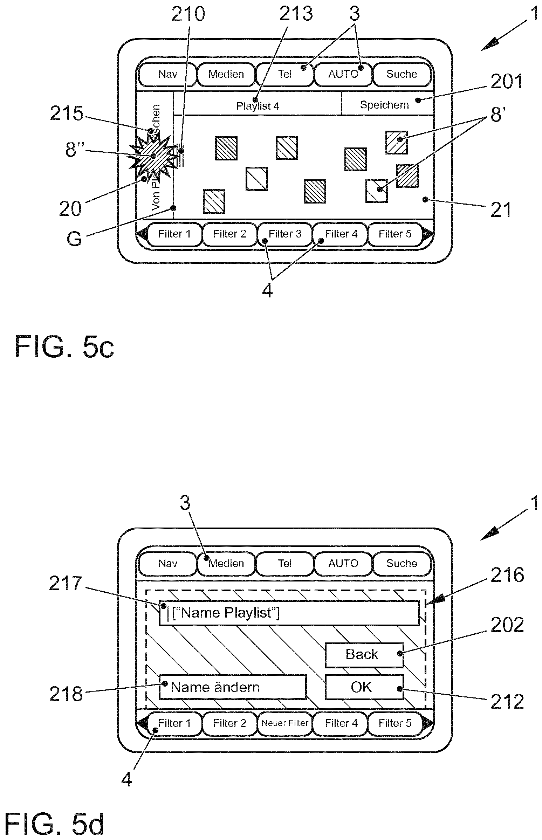

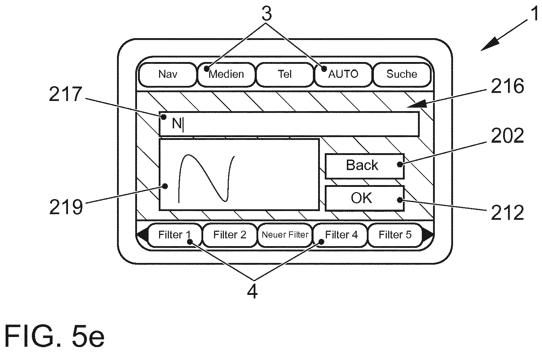

Wie ein Album aus einer Wiedergabeliste gelöscht werden kann, wird anhand der Fig. 5 beschrieben. So wird ein zu löschendes Album 8' der Wiedergabeliste (Playlist 4) vom Bediener durch Berührung markiert, wobei zeitgleich im ersten Anzeigebereich 20 ein Textfeld 215 ("von Playlist 4 löschen") angezeigt wird, welches darüber informiert, wohin ein zu löschendes Album 8' nunmehr bewegt werden muss (vergleiche Fig. 5a).

Nach Bewegen eines markierten Albums 8' vom zweiten Anzeigebereich 21 in den ersten Anzeigebereich 20 (8"', vergleiche Fig. 5b) und anschließender Aufhebung der Markierung durch Aufgabe der Berührung des Bedieners von der Anzeigefläche 2 erfolgt wiederum eine graphische Rückmeldung (8") über das erfolgreiche Entfernen eines Albums 8' aus der Wiedergabeliste (vergleiche Fig. 5c).

Nach Änderung einer Wiedergabeliste durch Streichung von Musikalben 8' in beschriebener Weise, ist ein entsprechendes Speicherfeld 201 zur Speicherung der Änderungen vorhanden.

Wie bereits erwähnt, kann ein Wechsel zwischen der "Wiedergabelisten-Ansicht", in der der Inhalt einer Wiedergabeliste (also der in der beschriebenen Weise gekennzeichneten Alben 8') sichtbar ist (Fig. 4d), und der "Komplettansicht", in der die Grundmenge aller Alben 8 bzw. Titel 7 sichtbar ist (Fig. 4b), durch Hin- und Herschieben der Verschiebehilfe 210 bewirkt werden. Es wird also ein leicht verständliches Aufziehen oder Zuschieben einer schubladenartigen Wiedergabeliste für den Bediener nachempfunden.

Um einzelne Musiktitel aus einer Wiedergabeliste zu entfernen, muss analog Fig. 3a in der Ansicht gemäß Fig. 5a zunächst ein Album 8' durch Antippen ausgewählt werden, so dass dieses geöffnet wird und seine Titel angezeigt werden (analog Fig. 3b). Alsdann kann wiederum durch Markierung und entsprechendes Bewegen eines Titels auf den ersten Anzeigebereich 20 und Aufgabe der Berührung dessen Streichung aus einer Wiedergabeliste bewirkt werden (analog Fig. 3c und d).

Nach Änderung einer Wiedergabeliste durch Streichung von Musiktiteln in beschriebener Weise, ist analog Fig. 3d ein entsprechendes Speicherfeld 201 zur Speicherung der Änderungen vorhanden.

Nach Berührung des Speicherfeldes 201 wird ein Pop-up-Eingabebereich 216 geöffnet, in dem ein Namensfeld 217, ein Namensänderungsfeld 218, eine Zurücktaste 202 und ein OK-Feld 212 angezeigt werden (Fig. 5d).

Wurde eine vorhandene Wiedergabeliste in beschriebener Weise verändert, so erscheint im Namensfeld 217 der bestehende Name der Wiedergabeliste. Wurde eine neue Wiedergabeliste erstellt (vergleiche Fig. 2c bzw. Fig. 3d), erscheint im Namensfeld 217 der Text "Name Playlist", welcher auf die nun mögliche Benennung einer neuen Wiedergabeliste hinweist.

Über das OK-Feld 212 kann eine Wiedergabeliste unter dem bestehenden bzw. einem neu eingegebenen Namen abgespeichert werden. Über die Zurücktaste 202 gelangt der Bediener zurück zur Ansicht gemäß Fig. 5c bzw. Fig. 3d bzw. Fig. 2c.

Die Berührung des Namensänderungsfeldes 218 oder des Namensfeldes 217 führt zur Öffnung eines Handschrifterkennungsfeldes 219 (vergleiche Fig. 5e), in das die entsprechenden Buchstaben eines (neuen) Namens für eine Wiedergabeliste eingegeben werden können.

Fig. 6 zeigt nun äußerst schematisch ein Fahrerassistenzsystem 15 eines in Fig. 7 dargestellten Kraftfahrzeugs K.

Dabei vereint das Fahrassistenzsystem 15 in nicht näher dargestellter Weise wenigstens die Funktionalitäten eines Navigationssystems, eines Infotainmentsystems zum Abspielen bzw. Hören von Musik, eines Telekommunikationssystems sowie eines Systems zur Einstellung von bestimmten Betriebsparametern des Kraftfahrzeugs K.

Das Fahrassistenzsystem 15 umfasst eine zentrale Informationsverarbeitungseinheit 10, welche mehrere, auf nicht näher dargestellte Weise verbundene Recheneinheiten 14 aufweist, eine mit der Informationsverarbeitungseinheit 10 verbundene Eingabeeinheit 9 sowie eine mit der Informationsverarbeitungseinheit 10 verbundene Anzeigeeinheit 1.

Im vorliegenden Ausführungsbeispiel sind die Anzeigeeinheit 1 und die Eingabeeinheit 9 als eine Baueinheit, nämlich als Touchscreen ausgebildet. Ferner sind zwecks eines Datenaustauschs mit der Informationsverarbeitungseinheit 10 eine fest verbaute Speichereinheit 11 sowie eine anschließbare, mobile Speichereinheit 12 (z. B. USB-Stick) vorgesehen. In den Speichereinheiten 11 und 12 sind Datensätze 110 und 120 abgelegt bzw. ablegbar, welche den Musiktiteln 7 bzw. den Musikalben 8 oder auch Kartendaten eines Navigationssystems entsprechen können.

Die für die zuvor beschriebene zwei-dimensionale Sortierung notwendigen Daten sind zweckmäßigerweise "offline" an einem geeigneten Computer-Arbeitsplatz bereits erzeugt worden.

Ferner ist ein mobiles Telekommunikationsgerät 13, beispielsweise ein Smartphone oder ein gewöhnliches Mobiltelefon, über eine entsprechende Schnittstelle am Fahrerassistenzsystem 15 anschließbar, wobei im Speicher des Telekommunikationsgerätes 13 Kontakt- bzw. Adressdatensätze 130 abgelegt sind.

Über das mobile Telekommunikationsgerät 13 ist zudem eine Verbindung zum Internet herstellbar (angedeutet durch Blitzsymbol).

Abgesehen vom dargestellten Ausführungsbeispiel ist es jedoch auch durchaus möglich, dass das erfindungsgemäße Verfahren lediglich in einem Computer (PC oder Laptop) oder auch nur in einem mobilen Telekommunikationsgerät (z.B. Smartphone) durchgeführt wird und dort dann dazu beiträgt, auf einfache und intuitive Weise beispielsweise Wiedergabelisten oder Kontakt-Favoritenlisten erstellen zu können.

Aus Fig. 7 ist ersichtlich, dass die Anzeige- und Eingabeeinheit (1, 9) des Fahrerassistenzsystems 15 als Touchscreen im Bereich einer Mittelkonsole M des Kraftfahrzeugs K angeordnet ist.

Die Erfindung ist nicht auf das bzw. die obigen Ausführungsbeispiele beschränkt. Diese wurden nur zur allgemeinen Erläuterung des Kerngedankens der Erfindung herangezogen. Die Erfindung kann im Rahmen ihres Schutzumfangs vielmehr auch andere als die zuvor beschriebenen Ausführungsbeispiele bzw. Ausprägungen annehmen.

### Bezugszeichenliste

- 1: Anzeigeeinheit
- 2: berührungsempfindliche Anzeigefläche
- 20: erster Anzeigebereich
- 200: Text
- 201: Speicherfeld
- 202: Zurücktaste
- 21: zweiter Anzeigebereich
- 210: symbolartige Verschiebehilfe
- 211: Pop-up-Fenster mit Hilfetext
- 212: OK-Feld
- 213: Textfeld
- 214: Textfelder
- 215: Textfeld
- 216: Pop-up-Eingabebereich
- 217: Namensfeld
- 218: Namensänderungsfeld
- 219: Handschrifterkennungsfeld
- 3: Bestimmten Funktionen fest zugeordnete Tasten (Hardkeys)
- 4: Tasten mit kontextabhängig zugeordneten Funktionen (Softkeys)
- 5: Objekt-Cluster
- 7: MP3-Dateien (Titel)
- 8: MP3-Dateien (Alben)
- 9: Eingabeeinheit
- 10: zentrale Informationsverarbeitungseinheit
- 11: Speichereinheit
- 110: Datensätze
- 12: Speichereinheit
- 120: Datensätze (MP3-Dateien)
- 13: mobiles Telekommunikationsgerät
- 130: Datensätze (Kontakt-Datensätze)
- 14: Recheneinheiten
- 15: Fahrerassistenzsystem
- A: Animation
- G: graphische Grenze zwischen den Anzeigebereichen
- H: Hochachse der Anzeigefläche
- K: Kraftfahrzeug
- M: Mittelkonsole
- Q: Querachse der Anzeigefläche
- WL: Wiedergabelisten

## Patentansprüche

1. Verfahren zur Kennzeichnung einer Teilmenge (7',8') einer in wenigstens einer Speichereinheit (11,12) abgelegten Grundmenge (7,8) von Datensätzen (110,120,130) und zur Visualisierung zumindest eines Teils der gekennzeichneten Teilmenge (7',8') auf einer Anzeigeeinheit (1),
wobei zur Kennzeichnung der Teilmenge (7',8') auf der Anzeigeeinheit (1) wenigstens zwei grafisch abgegrenzte Anzeigebereiche (20,21) gebildet werden, von denen in einem ersten Anzeigebereich (20) Datensätze (110,120,130) repräsentierende Kennzeichnungsobjekte (7,8) der Grundmenge dargestellt werden und einem zweiten Anzeigebereich (21) die gekennzeichnete oder zu kennzeichnende Teilmenge (7',8') der Kennzeichnungsobjekte (7,8) zugeordnet ist,
wobei eine Kennzeichnung einer Teilmenge (7',8') durch Markierung wenigstens eines Kennzeichnungsobjektes (7,8) im ersten Anzeigebereich (20), Bewegung des markierten wenigstens einen Kennzeichnungsobjektes (7,8) in den zweiten Anzeigebereich (21) und durch anschließendes Aufheben der Markierung erfolgt,
wobei die Aufhebung einer Kennzeichnung eines Datensatzes (110,120,130) durch Markierung eines Kennzeichnungsobjektes (7',8') im zweiten Anzeigebereich (21), Bewegung des markierten Kennzeichnungsobjektes (7',8') in den ersten Anzeigebereich (20) und durch anschließendes Aufheben der Markierung erfolgt, **dadurch gekennzeichnet, dass** der zweite Bereich (21) derart verändert wird oder veränderbar ist, dass auf der Anzeigeeinheit (1) anstatt zumindest eines Teils der Grundmenge (7,8) zumindest ein Teil der gekennzeichneten Teilmenge (7',8') dargestellt wird,
wobei vor einer Kennzeichnung wenigstens eines Kennzeichnungsobjektes (7,8) eine Animation (A) aktivierbar ist oder aktiviert wird, bei der sich der zweite Anzeigebereich (21) von einer maximalen Größe hin zu einer minimalen Größe verändert,
und wobei vor einer Aufhebung einer Kennzeichnung eine Animation (A) aktivierbar ist oder aktiviert wird, bei der sich der zweite Anzeigebereich (21) von einer minimalen Größe hin zu einer maximalen Größe verändert,
dass bei der Animation (A) der zweite Bereich (21) schubladenartig herausgezogen oder zugezogen wird, um deutlich zu machen, dass der zweite Bereich (21) durch ein Hin- und Herschieben einer Verschiebehilfe (210) verändert werden kann,
und dass die Veränderung des zweiten Bereiches (21), in einer Draufsicht auf eine Anzeigefläche (2) der Anzeigeeinheit (1) gesehen, durch eine Verschiebung einer Grenze (G) des zweiten Bereiches (21) in Querrichtung (Q) oder Hochrichtung (H) der Anzeigefläche (2) erfolgt.

2. Verfahren nach Anspruch 1, **dadurch gekennzeichnet, dass** zur Anzeige des zumindest einen Teils der Grundmenge (7,8) oder des zumindest eines Teils der gekennzeichneten Teilmenge (7',8') die Grenze (G) des zweiten Bereiches (21) von einer Seite der Anzeigefläche (2) in Richtung einer gegenüberliegenden Seite der Anzeigefläche (2) verschoben wird oder in dieser Weise verschiebbar ist.

3. Verfahren nach einem der vorhergehenden Ansprüche, **dadurch gekennzeichnet, dass** die Grundmenge (7,8) und/oder die gekennzeichnete Teilmenge (7',8') der in der wenigstens einen Speichereinheit (11,12) abgelegten Datensätze (110,120,130) auf der Anzeigeeinheit (1) in Form einer landkartenähnlichen Struktur darstellbar sind oder dargestellt werden und die landkartenähnlichen Struktur bei der Darstellung der Grundmenge (7,8) und/oder der gekennzeichneten Teilmenge (7',8') in einer Draufsicht auf die Anzeigeeinheit (1) zweidimensional geordnet erfolgt, in der Art, dass entlang einer Querachse (Q) ein erstes Sortierkriterium und entlang einer Hochachse (H) ein zweites Sortierkriterium wirksam ist.

4. Verfahren nach einem der vorhergehenden Ansprüche, **dadurch gekennzeichnet, dass** nach erfolgreicher Kennzeichnung eines Datensatzes (7,8) eine optische (7",8"), akustische und/oder haptische Rückmeldung erfolgt.

5. Fahrerassistenzsystem (15) für ein Kraftfahrzeug (K) mit wenigstens einer zentralen Informationsverarbeitungseinheit (14), wenigstens einer angeschlossenen oder anschließbaren Speichereinheit (11,12), wenigstens einer Eingabeeinheit (9) und wenigstens einer Anzeigeeinheit (1), wobei in der wenigstens einen Speichereinheit (11,12) Datensätze (110,120,130) abgelegt oder ablegbar sind, **dadurch gekennzeichnet, dass** in der Speichereinheit (11,12) abgelegte Datensätze (110,120,130) mithilfe der Eingabeeinheit (9) gemäß dem Verfahren nach einem der vorhergehenden Ansprüche kennzeichenbar, in Ihrer Kennzeichnung aufhebbbar und mittels der wenigstens einen Anzeigeeinheit (1) visualisierbar sind.

## Claims

1. Method for characterizing a subset (7', 8') of a basic set (7, 8) of data records (110, 120, 130) that is stored in at least one memory unit (11, 12) and for visualizing at least one part of the characterized subset (7', 8') on a display unit (1),
wherein the subset (7', 8') is **characterized by** forming on the display unit (1) at least two graphically delimited display areas (20, 21), of which a first display area (20) is used to depict characterization objects (7, 8) of the basic set that represent data records (110, 120, 130) and a second display area (21) has the subset (7', 8') of the characterization objects (7, 8) that has been characterized or is to be characterized assigned to it,
wherein a subset (7', 8') is **characterized by** marking at least one characterization object (7, 8) in the first display area (20), moving the marked at least one characterization object (7, 8) to the second display area (21) and by subsequently removing the marking, wherein a characterization of a data record (110, 120, 130) is removed by marking a characterization object (7', 8') in the second display area (21), moving the marked characterization object (7', 8') to the first display area (20) and by subsequently removing the marking,
**characterized in that** the second area (21) is altered or alterable such that the display unit (1) is used to present at least one part of the characterized subset (7', 8') instead of at least one part of the basic set (7, 8),
wherein an animation (A) that involves the second display area (21) changing from a maximum size to a minimum size is activatable or activated prior to at least one characterization object (7, 8) being characterized,
and wherein an animation (A) that involves the second display area (21) changing from a minimum size to a maximum size is activatable or activated prior to a characterization being removed,
**in that** the animation (A) involves the second area (21) being pulled out or pulled shut in the style of a drawer in order to make it clear that the second area (21) can be changed by essentially moving a movement aid (210) back and forth,
and **in that** the second area (21), as seen in a plan view of a display panel (2) of the display unit (1), is changed by moving a boundary (G) of the second area (21) in the transverse direction (Q) or vertical direction (H) of the display panel (2).

2. Method according to Claim 1, **characterized in that** the at least one part of the basic set (7, 8) or the at least one part of the characterized subset (7', 8') is displayed by virtue of the boundary (G) of the second area (21) being moved from one side of the display panel (2) in the direction of an opposite side of the display panel (2) or being movable in this manner.

3. Method according to either of the preceding claims, **characterized in that** the basic set (7, 8) and/or the characterized subset (7', 8') of the data records (110, 120, 130) stored in the at least one memory unit (11, 12) is/are presentable or presented on the display unit (1) in the form of a map-like structure, and the map-like structure is provided in two-dimensionally organized fashion in a plan view of the display unit (1) when the basic set (7, 8) and/or the characterized subset (7', 8') is/are presented, such that a first sorting criterion is effective along a transverse axis (Q) and a second sorting criterion is effective along a vertical axis (H).

4. Method according to one of the preceding claims, **characterized in that** successful characterization of a data record (7, 8) is followed by visual (7", 8"), audible and/or haptic feedback being provided.

5. Driver assistance system (15) for a motor vehicle (K) having at least one central information processing unit (14), at least one connected or connectable memory unit (11, 12), at least one input unit (9) and at least one display unit (1), wherein data records (110, 120, 130) are stored or storable in the at least one memory unit (11, 12), **characterized in that** data records (110, 120, 130) stored in the memory unit (11, 12) are characterizable by means of the input unit (9) using the method according to one of the preceding claims, are able to have their characterization removed and are visualizable by means of the at least one display unit (1) .

## Revendications

1. Procédé pour l'identification d'un sous-ensemble (7', 8') d'un ensemble fondamental (7, 8) stocké dans au moins une unité de mémoire (11, 12) de jeux de données (110, 120, 130) et pour la visualisation d'au moins une partie du sous-ensemble (7', 8') identifié sur une unité d'affichage (1),
au moins deux zones d'affichage (20, 21) délimitées graphiquement étant formées sur l'unité d'affichage (1) en vue d'identifier le sous-ensemble (7', 8'), parmi lesquelles des objets d'identification (7, 8) de l'ensemble fondamental représentant les jeux de données (110, 120, 130) sont représentés dans une première zone d'affichage (20) et le sous-ensemble (7', 8') identifié ou à identifier des objets d'identification (7, 8) est associé à une deuxième zone d'affichage (21),
une identification d'un sous-ensemble (7', 8') étant effectuée par marquage d'au moins un objet d'identification (7, 8) dans la première zone d'affichage (20), déplacement de l'au moins un objet d'identification (7, 8) dans la deuxième zone d'affichage (21) et ensuite par la suppression du marquage,
la suppression d'une identification d'un jeu de données (110, 120, 130) s'effectuant par le marquage d'un objet d'identification (7', 8') dans la deuxième zone d'affichage (21), le déplacement de l'objet d'identification (7', 8') marqué dans la première zone d'affichage (20) et ensuite par la suppression du marquage,
**caractérisé en ce que**
la deuxième zone (21) est modifiée ou modifiable de telle sorte qu'au moins une partie du sous-ensemble (7', 8') identifié est représenté sur l'unité d'affichage (1) à la place d'au moins une partie de l'ensemble fondamental (7, 8),
une animation (A) pouvant être ou étant activée avant une identification d'au moins un objet d'identification (7, 8), avec laquelle la deuxième zone d'affichage (21) change d'une taille maximale à une taille minimale,
et une animation (A) pouvant être ou étant activée avant une suppression d'une identification, avec laquelle la deuxième zone d'affichage (21) change d'une taille minimale à une taille maximale,
**en ce que** lors de l'animation (A), la deuxième zone (21) est extraite ou rétractée à la manière d'un tiroir afin d'indiquer clairement que la deuxième zone (21) peut être modifiée par glissement dans un sens et dans l'autre d'un accessoire de translation (210),
et **en ce que** la modification de la deuxième zone (21), en vue de dessus sur une surface d'affichage (2) de l'unité d'affichage (1), est effectuée par une translation d'une limite (G) de la deuxième zone (21) dans la direction transversale (Q) ou dans le sens de la hauteur (H) de la surface d'affichage (2).

2. Procédé selon la revendication 1, **caractérisé en ce que** pour afficher l'au moins une partie de l'ensemble fondamental (7, 8) ou l'au moins une partie du sous-ensemble (7', 8') identifié, la limite (G) de la deuxième zone (21) est amenée en translation d'un côté de la surface d'affichage (2) en direction d'un côté opposé de la surface d'affichage (2) ou peut être amenée en translation de cette manière.

3. Procédé selon l'une des revendications précédentes, **caractérisé en ce que** l'ensemble fondamental (7, 8) et/ou le sous-ensemble (7', 8') identifié des jeux de données (110, 120, 130) stockés dans l'au moins une unité de mémoire (11, 12) peuvent être ou sont représentés sur l'unité d'affichage (1) sous la forme d'une structure similaire à une carte géographique, et la structure similaire à une carte géographique, lors de la représentation de l'ensemble fondamental (7, 8) et/ou du sous-ensemble (7', 8') identifié, en vue de dessus sur l'unité d'affichage (1) suivant un arrangement bidimensionnel de sorte qu'un premier critère de tri agit le long d'un axe transversal (Q) et un deuxième critère de tri le long d'un axe de hauteur (H).

4. Procédé selon l'une des revendications précédentes, **caractérisé en ce qu'**après avoir accompli l'identification d'un jeu de données (7, 8), une rétroaction visuelle (7", 8"), sonore et/ou haptique a lieu.

5. Système d'assistance au conducteur (15) pour un véhicule automobile (K) comprenant au moins une unité de traitement d'informations (14) centrale, au moins une unité de mémoire (11, 12) connectée ou connectable, au moins une unité de saisie (9) et au moins une unité d'affichage (1), des jeux de données (110, 120, 130) étant ou pouvant être stockés dans l'au moins une unité de mémoire (11, 12), **caractérisé en ce que** les jeux de données (110, 120, 130) stockés dans l'au moins une unité de mémoire (11, 12) peuvent être identifiés à l'aide de l'unité de saisie (9) conformément au procédé selon l'une des revendications précédentes, leur identification peut être supprimée et ils peuvent être visualisés au moyen de l'au moins une unité d'affichage (1).
